(19) Europäisches Patentamt
European Patent Office
Office européen des brevets

(11) **EP 3 837 305 B1**

(12) **EUROPÄISCHE PATENTSCHRIFT**

(45) Veröffentlichungstag und Bekanntmachung des Hinweises auf die Patenterteilung:
**03.11.2021  Patentblatt 2021/44**

(21) Anmeldenummer: **18756239.2**

(22) Anmeldetag: **17.08.2018**

(51) Int Cl.:
**C08G 77/20** (2006.01)    **C08L 83/04** (2006.01)

(86) Internationale Anmeldenummer:
**PCT/EP2018/072356**

(87) Internationale Veröffentlichungsnummer:
**WO 2020/035152 (20.02.2020 Gazette 2020/08)**

(54) **VERNETZBARE ORGANOPOLYSILOXAN-ZUSAMMENSETZUNGEN**

CROSSLINKABLE ORGANOSILOXANE COMPOSITIONS

COMPOSITIONS D'ORGANOPOLYSILOXANES RÉTICULABLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.06.2021  Patentblatt 2021/25**

(73) Patentinhaber: **Wacker Chemie AG**
**81737 München (DE)**

(72) Erfinder:
• **OSTENDORF, Detlev**
**01129 Dresden (DE)**
• **STEPP, Michael**
**5123 Überackern (AT)**

(74) Vertreter: **Budczinski, Angelika et al**
**Wacker Chemie AG**
**Intellectual Property**
**Hanns-Seidel-Platz 4**
**81737 München (DE)**

(56) Entgegenhaltungen:
**WO-A1-2014/065432**

• **DATABASE WPI Week 201181 Thomson Scientific, London, GB; AN 2011-P88510 XP002790488, -& JP 2011 246680 A (SHINETSU CHEM IND CO LTD) 8. Dezember 2011 (2011-12-08)**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft durch Hydrosilylierungsreaktion vernetzbare Organopolysiloxan-Zusammensetzungen, Verfahren zu deren Herstellung sowie deren Verwendung und daraus erhältliche Vulkanisate.

Organopolysiloxanharze, die reaktive Einheiten mit aliphatischen Kohlenstoff-Kohlenstoff-Mehrfachbindungen enthalten, können mit geeigneten Kopplern, welche über zwei reaktive SiH-Funktionen verfügen, oder mit Vernetzern mit mindestens drei reaktiven SiH-Funktionen in Gegenwart von - zumeist platinhaltigen - Katalysatoren durch Hydrosilylierungs- bzw. Additionsreaktion vernetzt werden. Der Vorteil von vulkanisierten Organopolysiloxanharzen im Vergleich zu organischen Systemen, wie ungesättigten Polyesterharzen oder Epoxidharzen, liegt in ihrer Eigenschaft, hohe UV- und hohe Hitzebeständigkeit zu kombinieren, begründet. Außerdem weisen Organopolysiloxanharze niedrige Dielektrizitätskonstanten und gute Beständigkeit gegenüber Chemikalien auf. Aus diesen Gründen finden Organopolysiloxanharze Anwendung z.B. als Vergussmasse zur Herstellung elektrischer oder elektronischer Bauteile, insbesondere bei der Herstellung von optischen Halbleiterelementen wie Hochleistungs-LEDs (= Light Emitting Device), als Isoliermaterial, z.B. in Traktionsmotoren, zur Festlegung der Wicklungen und zum Ausfüllen der Hohlräume zwischen den Windungen sowie als Beschichtungsmaterial. Durch die Verwendung von Fasern, verstärkenden Füllstoffen oder Modifikatoren können die mechanischen Eigenschaften, Festigkeit oder Bruchzähigkeit, optimiert werden um die Einsatzmöglichkeiten von additionsvernetzenden Organopolysiloxanharz-Zusammensetzungen für Anwendungen zu erweitern, in denen höhere Ansprüche an Festigkeit oder Langlebigkeit vorausgesetzt werden. Allerdings sind die vulkanisierten Netzwerke von Organopolysiloxanharzen im Vergleich zu organischen Systemen im Allgemeinen spröder, was auf eine geringere Duktilität, d.h. auf geringe Fließeigenschaften des Polymernetzwerkes, zurückgeführt werden kann. Die geringen Fließeigenschaften und dadurch bedingt die niedrigere Bruchzähigkeit des Materials sind ebenfalls erkennbar an einer Druckversuchskurve an einem hohen Wert für das Fließverhältnis. Zudem zeigen derartige spröde Materialien typischerweise auch ein inhomogenes Polymernetzwerk und damit einhergehend ein ungünstiges Dämpfungsverhalten, erkennbar an einer tan delta-Messkurve einer dynamisch-mechanischen Analyse (DMA) anhand einer größeren Halbwertsbreite und einer niedrigeren Höhe des Dämpfungsmaximums tan delta$_{max}$ bei der Glasübergangstemperatur (Tg). Dagegen deutet ein schmaler und hoher tan delta-Peak (= hohe Dämpfung) beim Glasübergang auf ein homogeneres Netzwerk hin, welches im Allgemeinen bei thermoplastischen Materialien mit einer engen Molgewichtsverteilung beobachtet wird; dieses Erscheinungsbild ist aber nicht üblich für ein typisch duroplastisches Material. Umgekehrt zeigen vulkanisierte Netzwerke von Organopolysiloxanharzen, die bessere Fließeigenschaften, also einen niedrigen Wert für das Fließverhältnis, und damit verbunden höhere Bruchzähigkeiten aufweisen, eher niedrige Festigkeiten, d.h. einen niedrigen Elastizitätsmodul (E-Modul).

WO2016/001154 beschreibt in den Beispielen eine einfache Herstellung von cyclischen Siloxanen, welche frei von aromatischen Resten sind, durch Umsetzung von Alkali-Siliconaten oder deren Kondensationsprodukten.

WO 2014/065432 A1 und JP 2011 246680 A beschreiben eine durch Hydrolsilylierungsreaktion vernetzbare Zusammensetzung.

Die Aufgabe der vorliegenden Erfindung besteht darin vernetzbare Zusammensetzungen bereitzustellen, mit denen Vulkanisate mit hoher Festigkeit, d.h. einem hohen E-Modul, und gleichzeitig hoher Bruchzähigkeit, ausgedrückt durch einen kleinen Wert für das Fließverhältnis sowie ein hohes und schmales Dämpfungsmaximum tan delta$_{max}$, erhalten werden können.

Gegenstand der Erfindung sind durch Hydrosilylierungsreaktion vernetzbare Zusammensetzungen enthaltend

(A) aliphatisch ungesättigte Organopolysiloxane hergestellt durch Umsetzung von

(i) Alkalisalzen von Silanolen (sogenannten Alkali-Siliconaten) der allgemeinen Formel

$$R_aR^1_b(OH)_{3-p}Si(OM)_p \qquad (II)$$

und/oder deren Kondensationsprodukten,

mit der Maßgabe, dass in Komponente (i) das durchschnittliche Molverhältnis Alkalimetall:Silicium 0,10 bis 2,00, bevorzugt 0,10 bis 1,50, besonders bevorzugt 0,40 bis 1,00, insbesondere 0,50 bis 0,90, beträgt,

mit (ii) Chlorsilanen der allgemeinen Formel

$$R^7_rR^8R^9_tSiCl \qquad (III),$$

wobei

M Alkalimetallkation darstellt,

R und $R^7$ unabhängig voneinander gleich oder verschieden sein können und Alkylreste darstellen,

$R^8$ gleich oder verschieden sein kann und einwertige Kohlenwasserstoffreste mit aliphatischen Kohlenstoff-Kohlenstoff-Mehrfachbindungen bedeutet,

$R^1$ und $R^9$ unabhängig voneinander gleich oder verschieden sein können und von aliphatischen Kohlenstoff-Kohlenstoff-Mehrfachbindungen freie, aromatische Kohlenwasserstoffreste bedeuten,

a 0 oder 1 ist,

b 0 oder 1 ist, mit der Maßgabe, dass a+b=1 ist,

p 1, 2 oder 3, bevorzugt 1 oder 2, besonders bevorzugt 1, ist,

r 0, 1, 2 oder 3, bevorzugt 1 oder 2, ist und

t 0, 1 oder 2 ist, mit der Maßgabe, dass r+t=2 ist,

mit der Maßgabe, dass die Siliconatkomponente (i) und/oder die Chlorsilane (ii) der Formel (III) mindestens einen von aliphatischer Kohlenstoff-Kohlenstoff-Mehrfachbindung freien, aromatischen Kohlenwasserstoffrest aufweisen,

(B) Organosiliciumverbindungen mit zwei Si-gebundenen Wasserstoffatomen und

(C) die Anlagerung von Si-gebundenem Wasserstoff an aliphatische Mehrfachbindung fördernden Katalysator.

Im Rahmen der vorliegenden Erfindung sollen von dem Begriff Organopolysiloxane sowohl polymere, oligomere wie auch dimere Siloxane mitumfasst werden.

Bevorzugt handelt es sich bei Rest R und $R^7$ um den Methyl-, n-Butyl, n-Octyl-, Ethylhexyl-, 2,2,4-Trimethylpentyl- oder 2,4,4-Trimethylpentylrest, besonders bevorzugt um den Methylrest.

Bevorzugt handelt es sich bei Rest $R^8$ um den Vinyl- oder 2-Propenylrest, besonders bevorzugt um den Vinylrest.

Bevorzugt handelt es sich bei Rest $R^1$ und $R^9$ unabhängig voneinander um den Phenyl-, o-, m- und p-Tolyl- oder Benzylrest, besonders bevorzugt um den Phenylrest.

Bei Alkalimetallkation M handelt es sich bevorzugt um M Lithium, Natrium, Kalium oder Cäsium, wobei Natrium oder Kalium besonders bevorzugt sind.

Bei der erfindungsgemäß eingesetzten Komponente (i) kann es sich um reine Silane der Formel (II) oder um Kondensationsprodukte von Silanen der Formel (II) oder um ein Gemisch von Silanen der Formel (II) und deren Kondensationsprodukten handeln, wobei die erfindungsgemäß eingesetzte Komponente (i) bevorzugt überwiegend aus Kondensationsprodukten von Silanen der Formel (II) besteht. Insbesondere besteht erfindungsgemäß eingesetzte Komponente (i) zu mehr als 90 Gew.-%, bevorzugt mehr als 95 Gew.-%, besonders bevorzugt mehr als 99 Gew.-%, insbesondere zu 100 Gew.-%, aus Kondensationsprodukten von Silanen der Formel (II).

Beispiele für erfindungsgemäß eingesetzte Komponente (i) ist sind $[PhSiO_{2/2}(OM)]_4$, $[PhSiO_{2/2}(OM)]_3$, $[Ph(OH)_{1,50}SiO_{1/2}(OM)_{0,50}]_2$, $[Ph(OH)_{1,35}SiO_{1/2}(OM)_{0,65}]_2$, $[Ph(OH)SiO_{1/2}(OM)]_2$, $Ph(OH)_{2,35}Si(OM)_{0,65}$, $[Me(OH)_{1,35}SiO_{1/2}(OM)_{0,65}]_2$, $[Me(OH)SiO_{1/2}(OM)]_2$, $Me(OH)_{2,3}Si(OM)_{0,7}$, $Me(OH)_{2,5}Si(OM)_{0,5}$, $[(Me(OH)SiO_{2/2})_2(MeSiO_{2/2}(OM))_2]$, $[Me(OH)_{1,5}SiO_{1/2}(OM)_{0,5}]_2$, $[Me(OH)_{1,35}SiO_{1/2}(OM)_{0,65}]_2$, $Me(OH)_{1,80}Si(OM)_{1,20}$, $Me(OH)_{0,30}SiO_{2/2}(OM)_{0,70}$, $[MeSiO_{2/2}(OM)]_4$, $[Me\text{-}SiO_{2/2}(OM)]_3$ und $[(Me(OH)O_{1/2}(OM))_{0,5B}(Ph(OH)SiO_{1/2}(OM))_{0,42}]$, wobei Me gleich Methyl, Ph gleich Phenyl und M gleich Natrium oder Kalium ist, sowie das Handelsprodukt SILRES® BS Pulver S der Wacker Chemie AG, D-München.

Bei erfindungsgemäß eingesetzter Komponente (i) handelt es sich bevorzugt bei 20°C und 1013 hPa um Feststoffe, die bevorzugt bei diesen Bedingungen wasserlöslich sind.

Bei der erfindungsgemäß eingesetzten Siliconat-Komponente (i) handelt es sich um handelsübliche Produkte bzw. können nach in der Chemie gängigen Verfahren hergestellt werden, wie z.B. in WO2013/041385, WO2013/075969 und 2012/022544 beschrieben.

Beispiele für die erfindungsgemäß eingesetzten Chlorsilane (ii) sind $Me_2ViSiCl$, $MeViPhSiCl$, $ViPh_2SiCl$, $Me_2BchSiCl$ und $Me_2DcpSiCl$, wobei $Me_2ViSiCl$ bevorzugt ist, mit Me gleich Methylrest, Vi gleich Vinylrest, Bch gleich Bicycloheptenylrest, Dcp gleich 3a,4,5,6,7,7a-hexahydro-4,7-methano-1H-indenylrest und Ph gleich Phenylrest.

Bei den Chlorsilanen (ii) handelt es sich um handelsübliche Produkte bzw. sind sie nach in der Chemie gängigen Verfahren herstellbar.

Die erfindungsgemäß eingesetzten Chlorsilane (ii) sind bei 20°C und 1013 hPa bevorzugt flüssig.

Bei der Herstellung von erfindungsgemäß eingesetzter Komponente (A) werden pro Mol-Äquivalent Siliconat-Komponente (i) vorzugsweise 1,0 bis 20,0 Mol-Äquivalente, bevorzugt 1,0 bis 10,0 Mol-Äquivalente, besonders bevorzugt 1,0 bis 5,0 Mol-Äquivalente, insbesondere 1,0 bis 3,0 Mol-Äquivalente, Chlorsilane (ii) eingesetzt.

Bevorzugt wird für die Herstellung der erfindungsgemäßen Organopolysiloxane (A) organisches Lösungsmittel (iii) eingesetzt.

Beipiele für gegebenenfalls eingesetzte Lösungsmittel (iii) sind die unten für Lösungsmittel (F) genannten Beispiele, bevorzugt Ether oder gesättigte Kohlenwasserstoffe, besonders bevorzugt Methyl-tert-butylether, das Handelsprodukt ISOPAR™ E der Fa. ExxonMobil oder n-Hexan.

Bevorzugt findet die Herstellung der erfindungsgemäß eingesetzten Organopolysiloxane (A) unter weitestgehendem Ausschluss von Wasser aus der umgebenden Atmosphäre statt, was z.B. durch Überschleierung mit trockener Luft, bevorzugt mit einem Taupunkt bei 1013 hPa unter 0°C, oder Schutzgas, wie beispielsweise Stickstoff, realisiert werden kann.

Bevorzugt erfolgt die Herstellung der erfindungsgemäß eingesetzten Organopolysiloxane (A) durch Zugabe der Komponente (i) zu den Chlorsilanen (ii) oder durch Zugabe der Chlorsilane (ii) zur Komponente (i) in der Weise, dass zumindest eine Komponente in flüssiger oder in gelöster oder suspendierter Form in einem Lösungsmittel (iii) vorliegt, besonders bevorzugt liegen beide Komponenten (i) und (ii) in flüssiger oder in gelöster oder suspendierter Form in einem Lösungsmittel vor.

Zum Abfangen des bei der erfindungsgemäßen Reaktion entstehenden Chlorwasserstoffs kann eine Hilfsbase (iv) zugesetzt werden. Als Hilfsbase (iv) können basische Salze oder stickstoffhaltige Verbindungen wie Amine, Harnstoffe, Imine, Imidazole, Guanidine oder Amidine eingesetzt werden. Beispiele für basische Salze (iv) sind Natriumcarbonat, Natriumhydrogencarbonat, Kaliumcarbonat, Kaliumhydrogencarbonat, Calciumcarbonat, Calciumhydrogencarbonat, Calciumoxid, Magnesiumcarbonat und Magnesiumoxid. Beispiele für stickstoffhaltige Verbindungen (iv) sind Ammoniak, Ethylamin, Butylamin, Trimethylamin, Triethylamin, Tributylamin, Harnstoff, Tetramethylharnstoff, Guanidin, Tetramethylguanidin, 1,8-Diazabicyclo[5.4.0]undec-7-en, N-Methylimidazol, N-Ethylimidazol, Piperidin, Pyridin und Picolin. Falls zur Herstellung der erfindungsgemäß eingesetzten Organopolysiloxane (A) stickstoffhaltige Verbindungen (iv) zum Einsatz kommen, dann vorzugsweise solche, bei denen die Stickstoffatome kein N-gebundenes Wasserstoffatom tragen.

Falls zur Herstellung der erfindungsgemäß eingesetzten Organopolysiloxane (A) Hilsbasen (iv) eingesetzt werden, beträgt das Verhältnis der Mol-Äquivalente von Hilfsbase (iv) zu Chlorsilan (ii) bevorzugt 1 bis 1,5:1. Bevorzugt werden zur Herstellung der erfindungsgemäßen Organopolysiloxane (A) keine Hilfsbasen eingesetzt.

Falls Hilfsbase (iv) eingesetzt wird, wird diese bevorzugt mit Komponente (i) vorgelegt, oder es werden die Komponenten (i) und (ii) parallel zur Hilfsbase (iv) dosiert, wobei die Hilfsbase (iv) gegebenenfalls in Lösungsmittel (iii) vorgelegt werden kann.

Nach Beendigung der Umsetzung von Komponente (i) mit Chlorsilanen (ii) können die Mischungen nach Abtrennung der flüchtigen Komponenten, der gegebenenfalls entstandenen Chlorid-Salze sowie der gegebenenfalls eingesetzten Lösungsmittel (iii) direkt verwendet werden. Falls erforderlich können der entstehende Chlorwasserstoff, die Alkalimetall-Chloridsalze, ggf. die Chlorid-Salze der Hilfsbasen (iv) und der Überschuss an Chlorsilanen (ii) mit Wasser ausgewaschen werden, wobei vorteilhafterweise zunächst die flüchtigen Bestandteile, gegebenenfalls eingesetzte Lösungsmittel (iii) und Überschuss an Chlorsilanen (ii) abdestilliert werden, um nicht abreagierte Chlorsilane (ii) rückzugewinnen.

Bei der erfindungsgemäß eingesetzten Komponente (A) handelt es sich bevorzugt um eine Mischung verschiedener Organopolysiloxane enthaltend zumindest zum Teil cyclische Organosiloxane.

Die erfindungsgemäß eingesetzten Organopolysiloxane (A) weisen bevorzugt durchschnittlich 9 bis 25, besonders bevorzugt durchschnittlich 9 bis 20, insbesondere 9 bis 15, Siliciumatome auf.

Vorzugsweise handelt es sich bei den erfindungsgemäß eingesetzten Organopolysiloxanen (A) um solche der durchschnittlichen Formel

$$[R_aR^1_bSiO_{3/2}]_m[R^7_rR^8R^9_tSiO_{1/2}]_n \qquad (I),$$

wobei R, $R^1$, $R^7$, $R^8$, $R^9$, a, b, r und t die oben genannten Bedeutungen haben und
$m \geq 0,50$ und $\leq 0,70$ ist sowie
$n \geq 0,30$ und $\leq 0,50$ ist,
mit der Maßgabe, dass in Formel (I) die Summe $b+t \neq 0$ und die Summe $m+n$ gleich 1 ist.

Bevorzugt beträgt bei den Organopolysiloxanen (A) der durchschnittlichen Formel (I) das Verhältnis n:m 0,40 bis 1,00, besonders bevorzugt 0,40 bis 0,80, insbesondere 0,45 bis 0,70.

Bevorzugt handelt es sich bei den erfindungsgemäß eingesetzten Organopolysiloxanen (A) um solche der durchschnittlichen Formel

$$[R_aR^1_bSiO_{3/2}]_m[Me_rR^8R^9_tSiO_{1/2}]_n \qquad (I'),$$

wobei R, $R^1$, $R^8$, $R^9$, a, b, r, t, m und n die oben genannten Bedeutungen haben und Me gleich Methylrest bedeutet, mit der Maßgabe, dass das Verhältnis n:m im Bereich 0,40 bis 1,00 liegt und dass in Formel (I') die Summe b+t≠0 und die Summe m+n gleich 1 ist.

Besonders bevorzugt handelt es sich bei den erfindungsgemäß eingesetzten Organopolysiloxanen (A) um solche der durchschnittlichen Formel ausgewählt aus

$[PhSiO_{3/2}]_m[MeR^8PhSiO_{1/2}]_n$ mit n:m = 0,40 bis 1,00,
$[MeSiO_{3/2}]_m[MeR^8PhSiO_{1/2}]_n$ mit n:m = 0,40 bis 1,00,
$[PhSiO_{3/2}]_m[Me_2R^8SiO_{1/2}]_n$ mit n:m = 0,40 bis 1,00 und
$[MeSiO_{3/2}]_m[Ph_2R^8SiO_{1/2}]_n$ mit n:m = 0,40 bis 1,00,
wobei $R^8$, m und n die oben genannten Bedeutungen haben und Me gleich Methylrest sowie Ph gleich Phenylrest bedeuten.

Insbesondere handelt es sich bei den erfindungsgemäß eingesetzten Organopolysiloxanen (A) um solche der durchschnittlichen Formel ausgewählt aus

$[PhSiO_{3/2}]_m[MeViPhSiO_{1/2}]_n$ mit n:m = 0,40 bis 1,00,
$[MeSiO_{3/2}]_m[MeViPhSiO_{1/2}]_n$ mit n:m = 0,40 bis 1,00 und
$[PhSiO_{3/2}]_m[Me_2ViSiO_{1/2}]_n$ mit n:m = 0,40 bis 1,00,
wobei Me gleich Methylrest, Ph gleich Phenylrest und Vi gleich Vinylrest bedeuten.

Bei der erfindungsgemäß eingesetzten Komponente (A) beträgt der Anteil an cyclischen Organopolysiloxanen der Formel (I) also solchen der Formel $(R_aR^1_bSi (OSiR^7_rR^8R^9_t)O_{2/2})_3$ oder $(R_aR^1_bSi(OSiR^7_rR^8R^9_t)O_{2/2})_4$ mit R, $R^1$, $R^7$, $R^8$, $R^9$, a, b, r und t gleich der oben genannten Bedeutungen, bezogen auf die Summe der Organopolysiloxane (A) der Formel (I), höchstens 0,80, bevorzugt höchstens 0,60, besonders bevorzugt höchstens 0,40, insbesondere höchstens 0,30.

Die erfindungsgemäß eingesetzten, nach Verfahren A hergestellten Organopolysiloxane (A) können noch im Gemisch mit nicht umgesetzten Edukten (i) und (ii), aus der Hydrolyse und Dimerisierung von Chlorsilanen (ii) entstehendem Disiloxan, z.B. schwer flüchtigem 1,3-Dimethyl-1,3-diphenyl-1,3-divinyldisiloxan, vorliegen, wobei bevorzugt der Gehalt an nicht umgesetzten Edukten (i) und (ii) weniger als 0,5 Gew.-% und der Gehalt an Disiloxanen weniger als 5 Gew.-% beträgt.

Die erfindungsgemäß eingesetzten Organopolysiloxane (A) weisen eine Gewichtsmittel-Molmasse Mw vorzugsweise von 900 bis 3 000 g/mol, bevorzugt von 900 bis 2 500 g/mol, besonders bevorzugt von 1 000 bis 2 400 g/mol, insbesondere von 1 000 bis 2 000 g/mol, auf.

Die erfindungsgemäß eingesetzten Organopolysiloxane (A) weisen eine Zahlenmittel-Molmasse Mn von vorzugsweise von 800 bis 2 000 g/mol, bevorzugt von 800 bis 1 500 g/mol, besonders bevorzugt von 850 bis 1 400 g/mol, insbesondere von 900 bis 1 200, auf.

Die erfindungsgemäß eingesetzten Organopolysiloxane (A) weisen Polydispersitäten Mw/Mn von 1,0 bis 3,5, vorzugsweise von 1,0 bis 2,5, bevorzugt von 1,1 bis 2,3, besonders bevorzugt von 1,1 bis 2,0, insbesondere von 1,1 bis 1,4, auf.

Beispiele für die erfindungsgemäß eingesetzten Organopolysiloxane (A) sind

$[(PhSi(OSiViMe_2)O_{2/2})_4]_{0,23}(PhSiO_{3/2})_{0,50}(ViMe_2SiO_{1/2})_{0,27}$, mit Mw von 1070 g/mol, Mn = 930 g/mol, Mw/Mn = 1,15;
$[(PhSiO_{3/2})_4(ViMe_2SiO_{1/2})_4]_{0,16}(PhSiO_{3/2})_{0,49}(ViMe_2SiO_{1/2})_{0,19}$, mit Mw von 1180 g/mol, Mn = 1055 g/mol, Mw/Mn = 1,12; $(PhSiO_{3/2})_{0,69}(ViMe_2SiO_{1/2})_{0,31}$,
mit Mw = 1310 g/mol, Mn = 1160 g/mol und Mw/Mn = 1,13; $(MeSiO_{3/2})_{0,63}(ViMePhSiO_{1/2})_{0,37}$,
mit Mw = 1150 g/mol, Mn = 900 g/mol und Mw/Mn = 1,28; $[(ViMePhSiO_{1/2})_2]_{0,05}[(MeSi(OSiViMePh)O_{2/2})_4]_{0,50}(MeSiO_{3/2})_{0,30}$-$(ViMePhSiO_{1/2})_{0,15}$,
mit Mw = 1020 g/mol, Mn = 690 g/mol und Mw/Mn = 1,47; $(PhSiO_{3/2})_{0,72}(ViMePhSiO_{1/2})_{0,28}$,
mit Mw = 2660 g/mol, Mn = 1900 g/mol und Mw/Mn = 1,40, $(PhSiO_{3/2})_{0,63}(ViMePhSiO_{1/2})_{0,37}$,
mit Mw = 2410 g/mol, Mn = 1460 g/mol und Mw/Mn = 1,65, $[(ViMePhSiO_{1/2})_2]_{0,11}[(PhSiO_{3/2})_3]_{0,23}[(PhSiO_{3/2})_4]_{0,33}$-$(ViMePhSiO_{1/2})_{0,33}$,
mit Mw = 2370 g/mol, Mn = 1080 g/mol und Mw/Mn = 2,20,
wobei Me gleich Methylrest, Vi gleich Vinylrest und Ph gleich Phenylrest bedeutet.

Bei der erfindungsgemäß eingesetzten Komponente (B) kann es sich um beliebige und bisher bekannte Organosiliciumverbindungen handeln, die zwei Si-gebundene Wasserstoffatome aufweisen, wie z.B. SiH-funktionelle Silane und Siloxane.

Bevorzugt handelt es sich bei Koppler (B) um Organosiliciumverbindungen enthaltend Einheiten der Formel

$$R^4_eH_fR^5_gSiO_{(4-e-f-g)/2} \qquad (IV),$$

worin

R[4] gleich oder verschieden sein kann und einen einwertigen oder zweiwertigen, SiC-gebundenen, gegebenenfalls substituierten, aliphatisch gesättigten Kohlenwasserstoffrest bedeutet,

R[5] gleich oder verschieden sein kann und einen einwertigen oder zweiwertigen, SiC-gebundenen, gegebenenfalls substituierten aromatischen, aliphatisch gesättigten Kohlenwasserstoffrest bedeutet,

e 0, 1, 2 oder 3, bevorzugt 0, 1 oder 2, besonders bevorzugt 1 oder 2, ist,

f 0, 1 oder 2, bevorzugt 1 oder 2, ist und

g 0, 1 oder 2, bevorzugt 1 oder 2, ist,

mit der Maßgabe, dass e+f+g ≤ 4 ist und pro Molekül zwei Si-gebundene Wasserstoffatome anwesend sind.

Bevorzugt enthalten Koppler (B) pro Molekül mindestens einen Rest R[5], besonders bevorzugt 1 bis 4, insbesondere 1 bis 2, Reste R[5].

Bevorzugt enthalten Koppler (B) pro Molekül mindestens einen Rest R[5] gleich einem zweiwertigen, SiC-gebundenen, aromatischen, aliphatisch gesättigten Kohlenwasserstoffrest, der insbesondere zwei Einheiten der Formel (IV) miteinander verbindet.

Beispiele für Reste R[4] sind Alkylreste, wie der Methyl-, Ethyl-, n-Propyl-, iso-Propyl-, 1-n-Butyl-, 2-n-Butyl-, iso-Butyl-, tert-Butyl-, n-Pentyl-, iso-Pentyl-, neo-Pentyl-, tert-Pentylrest; Hexylreste, wie der n-Hexylrest; Heptylreste, wie der n-Heptylrest; Octylreste, wie der n-Octylrest und iso-Octylreste, wie der 2,4,4-Trimethylpentyl- und der 2,2,4-Trimethylpentylrest; Nonylreste, wie der n-Nonylrest; Decylreste, wie der n-Decylrest; Dodecylreste, wie der n-Dodecylrest; Hexadecylrest, wie der n-Hexadecylrest; Octadecylreste, wie der n-Octadecylrest; Cycloalkylreste, wie der Cyclopentyl-, Cyclohexyl-, Cycloheptylrest und Methylcyclohexylrest, sowie der Methylen-, Ethylen-, Dimethylmethylen- und Methylmethylenrest, bevorzugt der Methylrest.

Beispiele für Reste R[5] sind Arylreste, wie der Phenyl-, Biphenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der $\alpha$- und der $\beta$-Phenylethylrest, der 2-(2-Methylphenyl)ethylrest, der 2-(3-Methylphenyl)-ethylrest, 2-(4-Methylphenyl)ethylrest, der 2-Phenylpropenylrest und der 2-Phenyl-iso-propenylrest, sowie der Phenylen-, Methyl(phenyl)methylenrest, Phenylmethylen-, Diphenylmethylenrest, $-(C_6H_4)-CH_2-(C_6H_4)-$, $-(C_6H_4)-C(CH_3)_2-(C_6H_4)-$, $-(C_6H_4)-C(CH_3)H-(C_6H_4)-$, $-(C_6H_4)-C(C_6H_5)H-(C_6H_4)-$, $-(C_6H_4)-C(C_6H_5)Me-(C_6H_4)-$, $-(C_6H_4)-C(C_6H_5)_2-(C_6H_4)-$, $-(C_6H_4)-O-(C_6H_4)-$, $-(C_6H_4)-S-(C_6H_4)-$, sowie zweiwertiger Biphenyl-, Naphthalin-, Anthracen- oder Phenanthrenrest, wobei der Phenylrest, der zweiwertige Biphenylrest oder der Phenylenrest bevorzugt sind.

Beispiele für Koppler (B) sind Phenylsilane, wie Diphenylsilan (CAS 775-12-2), Methyl(phenyl)silan (CAS 766-08-5); Koppler mit Siloxaneinheiten, wie 1,3-Dimethyl-1,3-diphenyldisiloxan (CAS 6689-22-1), 1,1,3-Trimethyl-3-phenyldisiloxan, 1,5-Dimethyl-1,3,3,5-tetraphenyltrisiloxan, 1,1,3,3-Tetraphenyldisiloxan, 1,1,5,5-Tetramethyl-3,3-diphenyltrisiloxan, 1,1,3,5,5-Pentamethyl-3-phenyltrisiloxan, Koppler mit Phenylen- und zweiwertigen Biphenyleinheiten, wie 1,4-Bis(dimethylsilyl)benzol (CAS 2488-01-9), 1,4-Bis(methylphenylsilyl)benzol, 4,4'-Bis(dimethylsilyl)-1,1'-biphenyl, Bis(4'-(dimethylsilyl)-[1,1'-biphenyl]-4-yl)dimethylsilan, 4,4'-Bis(methylphenylsilyl)-1,1'-biphenyl, Bis(4-(dimethylsilyl)phenyl)dimethylsilan, Bis(4-(dimethylsilyl)phenyl) (ethyl)methylsilan, Bis(4-(dimethylsilyl)phenyl)diethylsilan, Bis(4-(dimethylsilyl)phenyl)di-n-butylsilan, Bis(4-(dimethylsilyl)phenyl)di-tert-butylsilan, Bis(4-(dimethylsilyl)phenyl)dipropylsilan, Bis(4-(dimethylsilyl)phenyl)di-iso-propylsilan, Bis(4-(dimethylsilyl)phenyl)methan, 2,2-Bis(4-(dimethylsilyl)phenyl)propan; Koppler mit zweiwertigen mehrcyclischen aromatischen Kohlenwasserstoffen, wie 9,10-Bis(dimethylsilyl)anthracen, 1,4-Bis(dimethylsilyl)naphthalin, 1,5-Bis(dimethylsilyl)naphthalin, 2,6-Bis(dimethylsilyl)naphthalin, 1,8-Bis(dimethylsilyl)naphthalin, 1,6-Bis(dimethylsilyl)naphthalin, 1,7-Bis(dimethylsilyl)naphthalin; sowie Bis(4-(dimethylsilyl)phenyl)ether und Bis(4-(dimethylsilyl)phenyl)sulfid.

Bevorzugt handelt es sich bei Koppler (B) um Diphenylsilan, 1,3-Dimethyl-1,3-diphenyl-disiloxan, 1,1,5,5-Tetramethyl-3,3-diphenyltrisiloxan, 1,4-Bis(dimethylsilyl)benzol, 4,4'-Bis(dimethylsilyl)-1,1'-biphenyl, Bis(4'-(dimethylsilyl)-[1,1'-biphenyl]-4-yl)dimethylsilan, Bis(4-(dimethylsilyl)phenyl)dimethylsilan, Bis(4-(dimethylsilyl)phenyl)methan, Bis(4-(dimethylsilyl)phenyl)ether oder Bis(4-(dimethylsilyl)phenyl)sulfid.

Besonders bevorzugt handelt es sich bei Koppler (B) um Diphenylsilan, 1,4-Bis(dimethylsilyl)benzol, 1,3-Dimethyl-1,3-diphenyl-disiloxan, 4,4'-Bis(dimethylsilyl)-1,1'-biphenyl oder Bis(4-(dimethylsilyl)phenyl)dimethylsilan, insbesondere um 1,4-Bis(dimethylsilyl)benzol, 4,4'-Bis(dimethylsilyl)-1,1'-biphenyl, 1,3-Dimethyl-1,3-diphenyl-disiloxan oder Bis(4-dimethylsilylphenyl)dimethylsilan.

Bei Koppler (B) handelt es sich um handelsübliche Produkte bzw. können sie nach in der Chemie gängigen Verfahren hergestellt werden, z.B. durch Grignard-Reaktion.

In den erfindungsgemäßen Zusammensetzungen werden Komponenten (A) und (B) in solchen Mengen eingesetzt, dass das Molverhältnis von Si-gebundenem Wasserstoff zu aliphatisch ungesättigten Kohlenstoff-Kohlenstoff-Mehrfachbindungen vorzugsweise 0,80 bis 1,20, bevorzugt 0,85 bis 1,10, besonders bevorzugt 0,90 bis 1,10, insbesondere 0,95 bis 1,05, beträgt.

Als Katalysatoren (C) können alle Katalysatoren eingesetzt werden, die auch bisher zur Anlagerung von Si-gebundenem Wasserstoff an aliphatische Mehrfachbindung eingesetzt wurden.

Beispiele für Katalysatoren (C) sind Metalle, wie Platin, Rhodium, Palladium, Ruthenium und Iridium, vorzugsweise Platin, die gegebenenfalls auf feinteiligen Trägermaterialien, wie Aktivkohle, Aluminiumoxid oder Siliciumdioxid, fixiert sein können.

Vorzugsweise werden als Katalysator (C) Platin sowie dessen Verbindungen und Komplexe verwendet.

Beispiele für solche Platinkatalysatoren (C) sind metallisches und feinverteiltes Platin, das sich auf Trägern, wie Siliciumdioxid, Aluminiumoxid oder Aktivkohle befinden kann, Verbindungen oder Komplexe von Platin, wie Platinhalogenide, z.B. $PtCl_4$, $H_2PtCl_6.6H_2O$, $Na_2PtCl_4.4H_2O$, Platin-Olefin-Komplexe, Platin-Alkohol-Komplexe, Platin-Alkoholat-Komplexe, Platin-EtherKomplexe, Platin-Aldehyd-Komplexe, Platin-Keton-Komplexe, einschließlich Umsetzungsprodukten aus $H_2PtCl_6.6H_2O$ und Cyclohexanon, Platin-Vinylsiloxankomplexe, insbesondere Platin-Divinyltetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin, oder Ammonium-Platinkomplexe gemäß EP-B 110 370 sowie Platin-Komplexe mit N-heterocyclischen Carbenen (NHC) wie [1,3-Bis(2,6-diisopropylphenyl)imidazol-2-yliden] [1,3-divinyl-1,1,3,3-tetramethyldisiloxan]platin(0) (CAS 849830-54-2), [1,3-Bis(2,6-diisopropylphenyl)-imidazolidinyliden] [1,3-divinyl-1,1,3,3-tetramethyl-disiloxan]platin(0) (CAS 873311-51-4), [1,3-Bis(cyclohexyl)-imidazol-2-yliden] [1,3-divinyl-1,1,3,3-tetramethyldisiloxan]-platin(0) (CAS 400758-55-6), 1,3-Bis-(2,4,6-trimethylphenyl)-3,4,5,6-tetrahydropyrimidin-1-ium-platin-(divinyltetramethyldisiloxan), 1,3-Bis-(2,6-dimethylphenyl)-3,4,5,6-tetrahydropyrimidin-1-ium-platin-(divinyltetramethyldisiloxan) und 1,3-Bis-(2-methylphenyl)-3,4,5,6-tetrahydropyrimidin-1-ium-platin-(divinyltetramethyldisiloxan) .

Bevorzugt wird als Katalysator (C) der in der Literatur lange als Karstedt Katalysator bekannte Platin-1,3-Divinyl-1,1,3,3-tetramethyldisiloxan-Komplex (CAS 68478-92-2) eingesetzt.

Katalysator (C) wird in den erfindungsgemäßen Zubereitungen vorzugsweise in Mengen von 1 bis 5000 Gew.-ppm (Gewichtsteilen je Million Gewichtsteilen), bevorzugt in Mengen von 1 bis 2000 Gew.-ppm, insbesondere in Mengen von 1 bis 500 Gew.-ppm, jeweils berechnet als elementares Metall, bevorzugt elementares Platin, und bezogen auf das Gesamtgewicht der Komponenten (A) und (B), eingesetzt.

Ganz besonders bevorzugt wird in den erfindungsgemäßen Zubereitungen als Katalysator (C) Karstedt Katalysator (CAS 68478-92-2) in Mengen von 5 bis 100 Gew.-ppm, berechnet als elementares Platin und bezogen auf das Gesamtgewicht der Komponenten (A) und (B) eingesetzt.

In einer bevorzugten Ausführungsform wird Katalysator (C) im Gemisch mit Inhibitor (D) eingesetzt.

Zusätzlich zu den Komponenten (A), (B) und (C) können die erfindungsgemäßen Zusammensetzungen weitere Stoffe enthalten, die unterschiedlich sind zu Komponenten (A), (B) und (C), wie z.B. Inhibitoren (D), Zusatzstoffe (E) sowie organische Lösungsmittel (F).

Die erfindungsgemäßen Zusammensetzungen können Inhibitoren (D) enthalten, bei denen es sich um die gleichen handeln kann, die auch bisher in durch Hydrosilylierungsreaktion vernetzbaren Massen verwendet wurden und die Anlagerung von Si-gebundenem Wasserstoff an aliphatische Kohlenstoff-Kohlenstoff-Mehrfachbindungen bei Raumtemperatur verzögern bzw. mit denen die Verarbeitungszeit und Vernetzungsgeschwindigkeit gezielt eingestellt werden können.

Beispiele für gegebenenfalls eingesetzte Inhibitoren (D) sind acetylenische Alkohole, wie 1-Ethinylcyclohexan-1-ol, 3,5-Dimethyl-1-hexin-3-ol, 2-Phenyl-3-butin-2-ol und 2-Methyl-3-butin-2-ol, Polymethylvinylcyclosiloxane, wie Tetramethyl-tetravinylcyclotetrasiloxan, lineare vinylterminierte Polydimethylsiloxane, Trialkylcyanurate, Maleate, wie Diallylmaleat, Dimethylmaleat und Bis(2-methoxy-1-methylethyl)maleat, Alkylfumarate, wie Diethylfumarat und Diallylfumarat, organische Hydroperoxide, wie Cumolhydroperoxid, tert.-Butylhydroperoxid und Pinanhydroperoxid, organische Peroxide, organische Sulfoxide, organische Amine und Amide, Phosphine und Phosphite, Phosphonite, Phosphinite, Nitrile, Diaziridine und Oxime sowie Alkylthioharnstoffe, Thiurammonosulfide und -disulfide.

Bevorzugte Beispiele für gegebenenfalls eingesetzte Inhibitoren (D) sind acetylenische Alkohole, wie 1-Ethinylcyclohexan-1-ol, 3,5-Dimethyl-1-hexin-3-ol, 2-Phenyl-3-butin-2-ol und 2-Methyl-3-butin-2-ol, Polymethylvinylcyclosiloxane, wie Tetramethyltetravinylcyclotetrasiloxan, lineare vinylterminierte Polydimethylsiloxane, Trialkylcyanurate, Maleate, wie Diallylmaleat, Dimethylmaleat und Bis(2-methoxy-1-methylethyl)maleat, Alkylfumarate, wie Diethylfumarat und Diallylfumarat, organische Hydroperoxide, wie Cumolhydroperoxid, tert.-Butylhydroperoxid und Pinanhydroperoxid, organische Peroxide, Phosphine und Phosphite, Phosphonite, Phosphinite, Diaziridine und Oxime sowie Alkylthioharnstoffe, Thiurammonosulfide und -disulfide.

Besonders bevorzugt handelt es sich bei den gegebenenfalls eingesetzten Inhibitoren (D) um 1-Ethinylcyclohexan-1-ol oder Thiurammonosulfide, insbesondere um Thiurammonosulfide.

Falls Inhibitor (D) eingesetzt wird, handelt es sich um Mengen von vorzugsweise 5 bis 5000 Gew.-ppm, besonders bevorzugt von 10 bis 2000 Gew.-ppm, insbesondere von 20 bis 1000 Gew.-ppm, jeweils bezogen auf das Gesamtgewicht der Komponenten (A) und (B). Die erfindungsgemäßen Zusammensetzungen enthalten bevorzugt Inhibitor (D).

Die additionsvernetzende erfindungsgemäße Zusammensetzung kann so eingestellt werden, dass sie nach Vereinigung aller sie bildenden Einzelkomponenten bei Temperaturen von -50°C bis 30°C über längere Zeiträume, insbesondere mehrere Wochen bis mindestens 2 Monaten, bevorzugt bis zu mindestens 3 Monaten, besonders bevorzugt bis zu mindestens 4 Monaten, insbesondere bis zu mindestens 5 Monaten lagerstabil ist. Ebenso ist es möglich die erfindungsgemäßen Zubereitungen so einzustellen, dass nach Vereinigung aller sie ausmachenden Komponenten nur eine begrenzte Verarbeitungszeit (Topfzeit) bis zur beginnenden Aushärtung verbleibt. Dazu wird entweder kein Inhibitor zugesetzt oder es wird beispielsweise eine Komponente (D) eingesetzt, welche die Additionsreaktion weniger stark inhibiert, z.B. acetylenische Alkohole, wie 1-Ethinylcyclohexan-1-ol.

Bei erfindungsgemäß gegebenenfalls eingesetzter Komponente (E) handelt es sich bevorzugt um Weichmacher, Haftvermittler, lösliche Farbstoffe, anorganische und organische Pigmente, Fluoreszenzfarbstoffe, Fungizide, Duftstoffe, Dispergierhilfsmittel, rheologische Additive, Korrosionsinhibitoren, Oxidationsinhibitoren, Lichtschutzmittel, Hitzestabilisatoren, flammabweisend machende Mittel, Mittel zur Beeinflussung der Klebrigkeit, Mittel zur Beeinflussung der elektrischen Eigenschaften, Mittel zur Verbesserung der Wärmeleitfähigkeit; Modifikatoren zur Erhöhung der Festigkeit, der Glasübergangstemperatur und/oder Bruchzähigkeit; verstärkende und nicht verstärkende Füllstoffe; sowie Fasergewebe bestehend aus Glas, Kohlenstoff oder Kunststoff; oder Kombinationen hiervon.

Falls die erfindungsgemäßen Zusammensetzungen Komponente (E) enthalten, handelt es sich jeweils um Mengen von bevorzugt 0,1 bis 200 Gewichtsteilen, besonders bevorzugt 0,1 bis 100 Gewichtsteilen, insbesondere 0,1 bis 50 Gewichtsteilen, jeweils bezogen auf 100 Gewichtsteile der Summe der Komponenten (A) und (B) .

Beispiele für gegebenenfalls eingesetztes Lösungsmittel (F) sind Ketone, wie Methyl-iso-butylketon, Methylethylketon, Methyl-iso-amylketon, Di-iso-butyl-keton, Aceton, Cyclohexanon, Diethylketon, 2-Hexanon, Acetylaceton und Butan-2,3-dion; Ester, wie Ethylacetat, Ethylenglykoldiacetat, gamma-Butyrolacton, 2-Methoxy-propylacetat (MPA), Di(propylenglycol)dibenzoat und Ethyl(ethoxy)propionat, Methylacetoacetat, Ethylacetoacetat, n-Butylacetoacetat, Methylacetat, n-, sec- oder tert-Butylacetat, 2-Hydroxypropionsäurebutylester, Propionsäureethylester, 2-Hydroxypropionsäureethylester und Maleinsäuredimethylester; Amide, wie N,N-Dimethylformamid, N,N-Dimethylacetamid, N-Methyl-2-pyrrolidon und N-Ethyl-2-pyrrolidon; Nitrile, wie Acetonitril, Propionitril, 3-Methoxypropionitril; Acetale, wie Methylal, Ethylhexylal, Butylal, 1,3-Dioxolan, 1,3,5-Trioxan und Glycerinformal; Ether, wie Methyl-tert-butylether, Tetrahydrofuran (THF), Diphenylether, Allylphenylether, Benzylphenylether, Cyclohexylphenylether, Methylphenylether, Tetrahydropyran, 4-Me¬thyltetrahydropyran, Butylphenylether, Dibenzylether, Anisol, 2-Methyltetrahydrofuran, Cyclopentylmethylether, Dibutylether, Diethylether, Mono-, Di-, Tri- oder Tetraethylenglycoldimethylether, Ethylenglycoldibutylether, Ethylmethylether und 1,4-Dio¬xan; Sulfoxide, wie Dimethylsulfoxid, Dipropylsulfoxid und Dibutylsulfoxid; gesättigte Kohlenwasserstoffe, wie n-Pentan, n-Hexan, Cyclohexan, n-Heptan, n-Octan und isomere Octane, wie 2-Ethylhexan, 2,4,4-Trimethylpentan, 2,2,4-Trimethylpentan und 2-Me-thylheptan, sowie Gemische gesättigter Kohlenwasserstoffe mit Siedebereichen zwischen 60-300°C, wie sie unter den Handelsnamen Exxsol™, Isopar™, Hydroseal® oder Shellsol® erhältlich sind; aromatische Kohlenwasserstoffe, wie Benzol, Toluol, o-, m- oder p-Xylol, Solvent Naphtha und Mesitylen; Acetale, wie Methylal, Ethylhexylal, Butylal, 1,3-Dioxolan und Glycerinformal; Carbonate, wie 1,3-Dioxolan-2-on, Diethylcarbonat, Dimethylcarbonat, Di-propylcarbonat und Propylenglycolcarbonat, Ethylencarbonat; Chloroform; Dichlormethan; Disiloxane sowie lineare oder cyclische Silicone, welche keine aliphatischen oder aromatischen Reste mit Kohlenstoff-Kohlenstoff-Mehrfachbindungen sowie keine Si-H-Gruppen tragen, wie Hexamethyldisiloxan, Octamethyltrisiloxan, Octamethylcyclotetrasiloxan, Decamethylcyclopentasiloxan und Methyl-tris(trimethylsiloxy)silan; sowie Mischungen hiervon.

Bevorzugte gegebenenfalls eingesetzte Lösungsmittel (F) sind Ether, aromatische Kohlenwasserstoffe oder gesättigte Kohlenwasserstoffe.

Falls die erfindungsgemäßen Zusammensetzungen Lösungsmittel (F) enthalten, handelt es sich um Mengen von bevorzugt 0,001 bis 20 Gewichtsteilen, besonders bevorzugt 0,01 bis 10 Gewichtsteilen, insbesondere 0,1 bis 5 Gewichtsteilen, jeweils bezogen auf 100 Gewichtsteile der Summe der Komponenten (A) und (B). Die erfindungsgemäßen Zusammensetzungen enthalten bevorzugt kein Lösungsmittel (F).

Vorzugsweise handelt es sich bei den erfindungsgemäßen Zusammensetzungen um solche, enthaltend

(A) aliphatisch ungesättigte Organopolysiloxane hergestellt durch Umsetzung von Komponente (i) mit Komponente (ii) gegebenenfalls in Anwesenheit von organischem Lösungsmittel (iii) und gegebenenfalls in Anwesenheit einer Hilfsbase (iv), wobei das Produktgemisch bevorzugt wässrig aufgearbeitet, filtriert und entflüchtigt wird,
(B) Organosiliciumverbindungen mit zwei Si-gebundenen Wasserstoffatomen und
(C) die Anlagerung von Si-gebundenem Wasserstoff an aliphatische Mehrfachbindung fördernden Katalysator,

gegebenenfalls (D) Inhibitor,
gegebenenfalls (E) weitere Bestandteile sowie
gegebenenfalls (F) Lösungsmittel.

Bevorzugt handelt es sich bei den erfindungsgemäßen Zusammensetzungen um solche, enthaltend

(A) Organopolysiloxan der Formel $[R_aR^1{}_bSiO_{3/2}]_m[Me_rR^8R^9{}_tSiO_{1/2}]_n$ (I') mit b+t≠0 und einem Verhältnis n:m von 0,40 bis 1,00,
(B) Koppler mit zwei reaktiven SiH-Einheiten,
(C) Katalysator,
(D) Inhibitor,

gegebenenfalls (E) weitere Bestandteile sowie
gegebenenfalls (F) Lösungsmittel.

Besonders bevorzugt handelt es sich bei den erfindungsgemäßen Zusammensetzungen um solche, enthaltend

(A) Organopolysiloxan der Formel $[RaR^1{}_bSiO_{3/2}]_m[Me_rR^8R^9{}_tSiO_{1/2}]_n$ (I') mit b+t≠0 und einem Verhältnis n:m von 0,40 bis 1,00,
(B) Koppler mit zwei reaktiven SiH-Einheiten und mindestens einem Rest $R^5$ gleich einem zweiwertigen, SiC-gebundenen, gegebenenfalls substituierten, aromatischen, aliphatisch gesättigten Kohlenwasserstoffrest,
(C) Katalysator,
(D) Inhibitor,

gegebenenfalls (E) weitere Bestandteile sowie
gegebenenfalls (F) Lösungsmittel.

Die erfindungsgemäßen Zusammensetzungen enthalten außer den Komponenten (A) bis (F) bevorzugt keine weiteren Bestandteile.

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Die erfindungsgemäßen Zusammensetzungen aus (A), (B) und (C) können bei 23°C und 1013 hPa fest oder flüssig sein, wobei sie bei 23°C und 1013 hPa bevorzugt flüssig sind.

Falls die erfindungsgemäßen Zusammensetzungen aus (A), (B) und (C) bei 23°C und 1013 hPa flüssig sind, haben sie eine dynamische Viskosität von bevorzugt mehr als 1 und weniger als 1 000 000 mPa·s, besonders bevorzugt mehr als 10 weniger als 500 000 mPa·s, insbesondere mehr als 100 weniger als 100 000 mPa·s, jeweils bei 23°C.

Die Herstellung der erfindungsgemäßen Zusammensetzungen kann nach bekannten Verfahren erfolgen, wie beispielsweise durch Mischen der einzelnen Komponenten in beliebiger Reihenfolge und auf bisher bekannte Art und Weise.

Ein weiterer Gegenstand der vorliegenden Erfindung ist ein Verfahren zur Herstellung der erfindungsgemäßen Zusammensetzungen durch Vermischung der einzelnen Komponenten.

Bei dem erfindungsgemäßen Verfahren kann das Vermischen bei Temperaturen im Bereich von bevorzugt 10 bis 40°C erfolgen. Falls erwünscht, kann das Vermischen aber auch bei höheren Temperaturen erfolgen, z.B. bei Temperaturen im Bereich von 40 bis 100°C, wobei der Zusammensetzung bevorzugt ein Inhibitor (D) hinzugefügt wird. Bevorzugt wird bei der Temperatur gemischt, die sich beim Vermischen bei Umgebungstemperatur aus der Temperatur der Rohstoffe plus der Temperaturerhöhung durch den Energieeintrag beim Mischen ergibt, wobei nach Bedarf geheizt oder gekühlt werden kann.

Das Vermischen kann beim Druck der umgebenden Atmosphäre, also etwa 900 bis 1100 hPa, erfolgen. Weiterhin ist es möglich, zeitweilig oder ständig unter vermindertem Druck zu mischen, wie z.B. bei 30 bis 500 hPa Absolutdruck, um flüchtige Verbindungen und/oder Luft zu entfernen oder bei Überdruck zu arbeiten, wie bei Drücken zwischen 1100 hPa und 3000 hPa Absolutdruck, insbesondere bei kontinuierlicher Arbeitsweise, wenn z.B. sich diese Drücke bei geschlossenen Systemen durch den Druck beim Pumpen und durch den Dampfdruck der eingesetzten Materialien bei erhöhten Temperaturen ergeben.

Das erfindungsgemäße Verfahren kann kontinuierlich, diskontinuierlich oder semikontinuierlich durchgeführt werden, bevorzugt wird es diskontinuierlich durchgeführt.

Bei einer bevorzugten Ausführungsform des erfindungsgemäßen Verfahrens zur Herstellung der Zusammensetzungen werden die Bestandteile (A), (B) und (C) sowie die gegebenenfalls eingesetzten Komponenten (D), (E) und (F) in beliebiger Reihenfolge vermischt.

Besonders bevorzugt werden bei dem erfindungsgemäßen Verfahren die Komponenten (A) und (B) sowie die gegebenenfalls eingesetzten Komponenten (D), (E) und (F) in beliebiger Reihenfolge vorgemischt und dann Komponente (C), gegebenfalls als Mischung mit Komponente (D) oder (F), hinzugefügt.

In einer weiteren besonders bevorzugten Ausführungsform werden bei dem erfindungsgemäßen Verfahren die Komponenten (A) und (B) sowie die gegebenenfalls eingesetzten Komponenten (E) und (F) in beliebiger Reihenfolge vorgemischt und dann eine Mischung von Komponenten (C) und (D), gegebenenfalls als Mischung mit Komponente (F), hinzugefügt.

In einer weiteren besonders bevorzugten Ausführungsform werden bei dem erfindungsgemäßen Verfahren die Komponente (A) sowie die gegebenenfalls eingesetzten Komponenten (E) und (F) in beliebiger Reihenfolge vorgemischt und dann eine Mischung von Komponenten (B) und (C), gegebenenfalls eingesetzter Komponente (D), und gegebenenfalls eingesetzte Komponente (F), hinzugefügt.

In einer bevorzugten Ausführungsform wird Komponente (A) direkt nach der Umsetzung von Komponente (i) mit Chlorsilanen (ii), gegebenenfalls in organischem Lösungsmittel (iii) sowie gegebenenfalls in Anwesenheit einer Hilfsbase (iv), wässrig aufgearbeitet, entflüchtigt und anschließend mit Organosiliciumkomponente (B) sowie den gegebenenfalls eingesetzten Komponenten (D), (E) und (F) in beliebiger Reihenfolge vermischt sowie dann Komponente (C), gegebenenfalls als Mischung mit Komponente (D) oder (F), hinzugefügt.

Die erfindungsgemäßen bzw. erfindungsgemäß hergestellten Mischungen werden bevorzugt vor dem Aushärten entgast.

Die erfindungsgemäße Vernetzung erfolgt bevorzugt bei Temperaturen im Bereich von 50 bis 270°C, besonders bevorzugt von 70 bis 200°C, insbesondere von 140 bis 200°C. Ganz besonders bevorzugt erfolgt die erfindungsgemäße Vernetzung zunächst bei Temperaturen von 100 bis 200°C woran sich ein Nachhärtungsschritt bei 210 bis 250°C anschließt.

Die erfindungsgemäße Vernetzung erfolgt bevorzugt beim Druck der umgebenden Atmosphäre, also etwa 900 bis 1100 hPa, sie kann aber auch bei erhöhtem Druck, also von 1200 hPa bis 10 MPa, erfolgen.

Die erfindungsgemäße Vernetzung kann unter Luft- oder Schutzgasatmosphäre, wie Stickstoff oder Argon, stattfinden. Bevorzugt findet die erfindungsgemäße Vernetzung bei Temperaturen bis 220°C unter Luftatmosphäre und bei Temperaturen über 220°C unter Schutzgasatmosphäre statt.

Ein weiterer Gegenstand der vorliegenden Erfindung sind Formkörper, hergestellt durch Vernetzung der erfindungsgemäßen Zusammensetzungen.

Die erfindungsgemäßen Formkörper weisen vorzugsweise einen Elastizitätsmodul, gemessen bei 23°C, größer 0,50 GPa, bevorzugt größer 0,80 GPa, besonders bevorzugt größer 1,00 GPa, auf.

Die erfindungsgemäßen Formkörper weisen bevorzugt eine Biegefestigkeit $\sigma_{fM}$, gemessen bei 23°C, größer 15 MPa, bevorzugt größer 20 MPa, besonders bevorzugt größer 25 MPa, insbesondere größer 30 MPa, auf.

Vorzugsweise weisen die erfindungsgemäßen Formkörper ein tan delta$_{max}$ von mindestens 0,400, bevorzugt von mindestens 0,500, besonders bevorzugt von mindestens 0,600, insbesondere von mindestens 0,700, auf.

Vorzugsweise weisen die erfindungsgemäßen Formkörper eine Halbwertsbreite, definiert als die Peakbreite bei tan delta$_{max}$/2, ≤ 25°C, bevorzugt ≤20°C, besonders bevorzugt ≤17°C, insbesondere ≤ 15°C, auf.

Vorzugsweise weisen die erfindungsgemäßen Formkörper im Druckversuch, gemessen bei 25°C, eine Druckfließspannung $\sigma_y$ auf, welche definiert ist als die Spannung, bei der zum ersten Mal ein Anstieg der Stauchung ohne einen Anstieg der Spannung erfolgt (siehe DIN EN ISO 604:2003-12, Kapitel 3.3.1) und an einem Spannungsmaximum in der Spannungs-/Stauchungskurve (siehe DIN EN ISO 604:2003-12, Kapitel 4, Bild 1, Kurve a) erkennbar ist, gefolgt von einem Abfall der Spannung bei weiterem Anstieg der Stauchung nach $\sigma_y$ (Dehnungserweichung).

Vorzugsweise weisen die erfindungsgemäßen Formkörper ein Fließverhältnis, gemessen bei 25°C, kleiner 1,40, bevorzugt kleiner 1,30, besonders bevorzugt kleiner 1,20, insbesondere kleiner 1,10, auf.

Die erfindungsgemäßen Formkörper haben den Vorteil, dass sie hohe Festigkeiten, d.h. hohe Elastizitätsmodul- und Biegefestigkeitswerte, mit guten Fließeigenschaften, d.h. ein niedriges Fließverhältnis $\sigma_{20\%}$:$\sigma_y$, und eine homogene Netzwerkstruktur, erkennbar an einem hohen Dämpfungsmaximum tan delta$_{max}$ bei der Glasübergangstemperatur (Tg) und einer geringen Halbwertsbreite, kombinieren.

Die erfindungsgemäßen Zusammensetzungen haben den Vorteil, dass sie aus leicht zugänglichen Stoffen nach gängigen Verfahren hergestellt werden können.

Die erfindungsgemäßen Zusammensetzungen haben den Vorteil, dass sie bei einer Temperatur von 23°C flüssig und gut verarbeitbar sind.

Das erfindungsgemäß Verfahren hat den Vorteil, dass es einfach durchführbar ist.

Viskositätsmessung

Im Rahmen der vorliegenden Erfindung wird die dynamische Viskosität nach DIN 53019 bei einer Temperatur, sofern nicht anders angegeben, von 23°C und einem Luftdruck von 1013 hPa bestimmt. Die Messung wird mit einem Rotationsrheometer "Physica MCR 300" von der Firma Anton Paar durchgeführt. Dabei wird für Viskositäten von 1 bis 200 mPa·s ein koaxiales Zylinder-Messsystem (CC 27) mit einem Ring-Messspalt von 1,13 mm genutzt und für Viskositäten von größer als 200 mPa·s ein Kegel-Platte-Messsystem (Searle-System mit Messkegel CP 50-1) verwendet. Die Schergeschwindigkeit wird der Polymerviskosität angepasst (1 bis 99 mPa·s bei 100 $s^{-1}$; 100 bis 999 mPa·s bei 200 $s^{-1}$; 1000 bis 2999 mPa·s bei 120 $s^{-1}$; 3000 bis 4999 mPa·s bei 80 $s^{-1}$; 5000 bis 9999 mPa·s bei 62 $s^{-1}$; 10000 bis 12499 mPa·s bei 50 $s^{-1}$; 12500 bis 15999 mPa·s bei 38,5 $s^{-1}$; 16000 bis 19999 mPa·s bei 33 $s^{-1}$; 20000 bis 24999 mPa·s bei 25 $s^{-1}$; 25000 bis 29999 mPa·s bei 20 $s^{-1}$; 30000 bis 39999 mPa·s bei 17 $s^{-1}$; 40000 bis 59999 mPa·s bei 10 $s^{-1}$; 60000 bis 149999 bei 5 $s^{-1}$; 150000 bis 199999 mPa·s bei 3,3 $s^{-1}$; 200000 bis 299999 mPa·s bei 2,5 $s^{-1}$; 300000 bis 1000000 mPa·s bei 1,5 $s^{-1}$.

Nach Temperierung des Messsystems auf die Messtemperatur wird ein dreistufiges Messprogramm bestehend aus einer Einlaufphase, einer Vorscherung und einer Viskositäts-Messung angewandt. Die Einlaufphase erfolgt durch stufenweise Erhöhung der Schergeschwindigkeit innerhalb einer Minute auf die oben angegebene von der zu erwartenden Viskosität abhängige Schergeschwindigkeit bei der die Messung erfolgen soll. Sobald diese erreicht ist, erfolgt bei konstanter Schergeschwindigkeit die Vorscherung für 30 s, anschließend werden zur Bestimmung der Viskosität 25 Einzelmessungen für je 4,8 s durchgeführt, aus denen der Mittelwert bestimmt wird. Der Mittelwert entspricht der dynamischen Viskosität, die in mPa·s angegeben wird.

**Herstellung der zylindrischen Probekörper**

Zur Durchführung der DMA, der Biegefestigkeits- und Druckversuch-Messungen wurden die Probekörper aus zylinderförmigen Vulkanisaten hergestellt. Die zylinderförmigen Vulkanisate wurden in Edelstahlröhrchen mit den Dimensionen Länge x Innendurchmesser = 150 mm x 10 mm, welche einseitig mit einer Schraubverschluss-Kappe aus Edelstahl verschlossen waren, hergestellt. Um ein Anhaften der Cyclosiloxan-Zusammensetzungen zu vermeiden befand sich innenliegend im Schraubverschluss eine Bodendichtung aus Polytetrafluorethylen; die Innenflächen der Edelstahlröhrchen wurden mit WACKER® SILICONE PASTE P unter Zuhilfenahme einer passenden Reagenzglasbürste vor dem Einfüllen der Organopolysiloxan-Zusammensetzungen dünn benetzt, anschließend wurden die Röhrchen 2 Stunden bei 180°C gelagert. Danach wurden die Röhrchen mit der Cyclosiloxan-Zusammensetzung befüllt und 72 Stunden bei 180°C im Umluftofen und anschließend weitere 2 Stunden bei 250°C im Umluftofen mit Stickstoffatmosphäre ausgehärtet. Dabei wurden die Edelstahlröhrchen aufrecht mit der offenen Seite nach oben gerichtet aufgestellt. Anschließend ließ man die Probekörper in den Röhrchen auf 23°C abkühlen bevor die Probekörper entformt wurden. Für die weitere Verwendung wurden die oberen 20 mm der Probekörper-Seite, die während der Aushärtung offen war, verworfen.

**Dynamisch mechanische Analyse (DMA)**

Messbedingungen:

- Messgerät: ARES-Rheometer (TA-Instruments)
- Temperaturbereich: -100°C - 300°C
- Heizrate: 4 K/min mit Stickstoffspülung
- Frequenz: 1 Hz
- Strain: Initial 0,03 %, automatisch erhöht, wenn Messsignal unter Schwellenwert

Für die Untersuchungen wurden quaderförmige Prüfkörper in den Dimensionen Länge x Breite x Höhe = 40 mm x 6 mm x 3 mm aus den zylindrischen Probekörpern hergestellt; die resultierende Einspannlänge betrug 25 mm.

In der vorliegenden Schrift entspricht tan delta der Dämpfung, d.h. dem Tangens des Phasenwinkels bzw. dem Verhältnis von Verlustmodul G" zu Speichermodul G'; tan $delta_{max}$ ist definiert als das Dämpfungsmaximum tan delta (= Höchstwert der Tangens delta-Kurve) bei der Glasübergangstemperatur Tg.

In der vorliegenden Schrift ist die Halbwertsbreite definiert als die Peakbreite der tan delta-Kurve in °C bei tan $delta_{max}$/2. Der in Tabelle 1 angegebene Wert für tan $delta_{max}$ wurde auf die dritte Nachkommastelle und der für die Halbwertsbreite auf ganze Zahlen gerundet, jeweils entsprechend DIN 1333:1992-02 Abschnitt 4.

**Druckversuch**

Im Rahmen der vorliegenden Erfindung wurden die Druckeigenschaften (Fließspannung) in Anlehnung an die Norm DIN EN ISO 604:2003-12 durchgeführt.

Messbedingungen:

- Messgerät: Instron Prüfmaschine 3369
- Kraftmessdose: 50 kN
- Druckstempel 50 mm,
- Prüfgeschwindigkeit: 1 mm/min
- Temperatur: 25°C, 28% rel. Feuchte
- Vorkraft: 40 N
- Schmiermittel: ohne

Probenvorbereitung: Für die Untersuchungen wurden zylindrische Prüfkörper mit einem Durchmesser von 9,5 mm und mit einer Höhe von 17 mm hergestellt. Der Druckversuch wurde an 3 Prüfkörpern eines Probekörpers durchgeführt. Die Probekörper wurden bis etwa 4,5 mm Stauchung, also etwa 26% bezogen auf die Ausgangshöhe, belastet und verformten sich bis zum Ende der Messung praktisch ideal tonnenförmig (bauchig). Zur Beurteilung der Material-Fließeigenschaft wurde das Fließverhältnis, definiert als der Quotient von der Druckspannung $\sigma$ in MPa bei 20% Stauchung und der Druckfließspannung $\sigma_y$ (siehe DIN EN ISO 604:2003-12, Kapitel 3.3.1) herangezogen. Der in Tabelle 1 angegebene Wert für das Fließverhältnis entspricht dem jeweiligen Mittelwert der drei Einzelmessungen, gerundet auf die zweite Nachkommastelle entsprechend DIN 1333:1992-02 Abschnitt 4.

**Biegefestigkeit**

In der vorliegenden Erfindung wurde die Biegefestigkeit und der Biege-Elastizitätsmodul nach ISO 178:2011-04 Verfahren A mit einer Prüfgeschwindigkeit von 5 mm/min bei einer Auflagedistanz von 60 mm gemessen. Die Messungen wurden bei 23°C und 50% relative Feuchte durchgeführt. Dabei wurde bevorzugt wie folgt vorgegangen: Es wurden zylinderförmige Prüfkörper in den Dimensionen Länge x Durchmesser = 100 mm x 9,5 mm verwendet. Die Messungen wurden an jeweils 5 Prüfkörpern durchgeführt. Die Biegefestigkeit $\sigma_{fM}$ (maximale Biegespannung, die während der Prüfung von dem Probekörper ertragen wird (siehe ISO 178:2011-04, Seite 6, Kapitel 3.4)) wurde berechnet nach der

Gleichung $\sigma_{fm} = \dfrac{6 \times L \times \sigma_f}{\pi \times \emptyset^3}$, wobei L die Auflagedistanz von 60 mm, $\sigma_f$ die Biegespannung in Newton und $\emptyset$ der Probekörperdurchmesser in mm ist. Der Biege-Elastizitätsmodul $E_f$ wurde berechnet nach der Gleichung $E_f =$

$\dfrac{L^3 \times (\sigma_{f2} - \sigma_{f1})}{0,15\ mm \times \pi \times \emptyset^4}$, wobei L die Auflagedistanz von 60 mm, $\sigma_{f1}$ die Biegespannung bei 0,10 mm Durchbiegung in Kilonewton (kN), $\sigma_{f2}$ die Biegespannung bei 0,25 mm Durchbiegung in Kilonewton (kN) und $\emptyset$ der Probekörperdurchmesser in mm ist. Der in Tabelle 1 angegebene Wert für die Biegefestigkeit $\sigma_{fM}$ in MPa und den Biege-Elastizitätsmodul $E_f$ in GPa entspricht dem jeweiligen Mittelwert der Einzelmessungen, gerundet auf ganze Zahlen (Biege-Elastizitätsmodul) bzw. auf eine Nachkommastelle (Biegefestigkeit) entsprechend DIN 1333:1992-02 Abschnitt 4.

**Molmassen**

Im Rahmen der vorliegenden Erfindung werden die Zahlenmittel-Molmasse Mn und die Gewichtsmittel-Molmasse Mw, jeweils in der Einheit g/mol, gerundet auf ganze 10er Zahlen entsprechend DIN 1333:1992-02 Abschnitt 4, mit Größenausschlusschromatographie (SEC/GPC) entsprechend DIN 55672-1/ISO 160414-1 sowie ISO 160414-3 bestimmt, indem ein Säulensatz basierend auf Polystyrol-co-Divinylbenzol als stationärer Phase aus drei Säulen unterschiedlicher Porengrößenverteilung der Reihenfolge nach 10000 Å, 500 Å und 100 Å mit einer Ausschlussgröße von größer als 450,000 g/mol gegen Polystyrol-Standards kalibriert wird. Phenyl-haltige Komponenten werden mit THF als Eluent bestimmt, nicht-phenyl-haltige mit Toluol als Eluent. Die Analysen werden bei einer Säulentemperatur von $45 \pm 1°C$ und mittels Brechungsindex-Detektor durchgeführt.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1013 hPa, und bei Raumtemperatur, also etwa 23°C bzw. einer Temperatur, die sich beim Zusammengeben der Reaktanden bei Raumtemperatur ohne zusätzliche Heizung oder Kühlung einstellt, durchgeführt.

Im Folgenden bedeutet

Me gleich Methylrest, Vi gleich Vinylrest, Ph gleich Phenylrest.

**Ausführungsbeispiele**

**Herstellung der Siloxankomponente 1**

Unter Stickstoffatmosphäre wurden 29,6 g (1644 mmol) deionisiertes Wasser vorgelegt, anschließend wurden zunächst 840,0 g Ethanol absolut (käuflich erhältlich bei der Sigma-Aldrich Chemie GmbH, D-Steinheim) zugegeben und dann 66,4 g (1160 mmol) festes Natriumhydroxid (käuflich erhältlich bei der Sigma-Aldrich Chemie GmbH, D-Steinheim) gelöst, wobei sich die Mischung auf etwa 52°C erwärmte und eine leichte Trübung annahm. Anschließend ließ man die Mischung unter Rühren auf 35°C abkühlen und fügte dann 400,0 g (1664 mmol) Triethoxyphenylsilan (CAS 780-69-8; käuflich erhältlich bei der Sigma-Aldrich Chemie GmbH, D-Steinheim) rasch innerhalb von 10 Minuten hinzu, die Temperatur der Mischung stieg dabei auf 48°C an. Es wurde 15 Minuten nachgerührt, wobei ein weißer Feststoff ausfiel und dann 30 Minuten unter Rückfluss auf 83°C erhitzt, wobei die Mischung klar und farblos wurde. Anschließend wurde die Mischung langsam auf 23°C abgekühlt und 6 Stunden weitergerührt. Danach wurde die Suspension filtriert und der Filterkuchen 1 Stunde bei <1 mbar und 80°C getrocknet. Es wurden 233,4 g eines feinen, weißen Siliconat-Pulvers (Siliconat 1) mit einem Kalium:Silicium-Verhältnis von 1:1 mit einem Festgehalt, ermittelt mit der Festgehalts-swaage HR73 Halogen Moisture Analyzer von Mettler Toledo bei 160°C, von 86,5 Gew.-% erhalten, das sich 50%ig in Wasser vollständig löste.

Unter Stickstoffatmosphäre wurden 196,7 g (1062 mmol) des so hergestellten Siliconats 1 vorgelegt und mit 518,0 g wasserfreiem tert-Butylmethylether (käuflich erhältlich bei der Sigma-Aldrich Chemie GmbH, D-Steinheim) vermischt, sodass eine gut rührbare Suspension entstand. Anschließend wurden 222,5 g (1844 mmol) Chlordimethylvinylsilan (CAS 1719-58-0; käuflich erhältlich bei der Sigma-Aldrich Chemie GmbH, D-Steinheim) langsam hinzugefügt, wobei sich die Mischung erwärmte und Gasentwicklung auftrat. Nach Zugabe von etwa 140 g wurde die Mischung deutlich viskoser und die Exothermie sowie die Gasentwicklung nahmen ab. An diesem Punkt wurde das restliche Chlordimethylvinylsilan zügig zugegeben; die Temperatur der weißen, cremigen Suspension betrug nach vollständiger Zugabe 56°C. Die Mischung wurde dann 3 Stunden bei 56°C unter Rückfluss erhitzt und auf Raumtemperatur abgekühlt. Anschließend wurden zur Mischung 461,5 g (2562 mmol) deionisiertes Wasser vorsichtig hinzugegeben, wobei eine exotherme Reaktion und Gasentwicklung einsetzen, sodass die Temperatur während der Zugabe 27°C bis 33°C betrug. Nach vollständiger Zugabe ließ man 30 Minuten weiterrühren, bevor die zwei entstandenen Phasen voneinander getrennt wurden. Zur oberen Phase wurden 55,0 g tert-Butylmethylether hinzugefügt, und die Mischung wurde dann filtriert. Es wurde ein klares Filtrat erhalten. Die volatilen Bestandteile wurden abdestilliert und der Rückstand bei 80°C und 0,5 mbar entflüchtigt. Das so erhaltene Produkt (Siloxankomponente 1), fiel als farbloser, öliger Rückstand an, welches mit einer mittleren Zusammensetzung

$[(PhSi(OSiViMe_2)O_{2/2})_4]_{0,23}(PhSiO_{3/2})_{0,50}(ViMe_2SiO_{1/2})_{0,27}$, einer Zahlenmittel-Molmasse Mn von 930 g/mol, einer Gewichtsmittel-Molmasse Mw von 1070 g/mol und einer Polydispersität von 1,15 aufwies.

**Herstellung der Siloxankomponente 2**

In einem 1l Rührkolben mit KPG-Rührer wurden unter Stickstoffatmosphäre 400,0 g (1664 mmol) Triethoxyphenylsilan (CAS 780-69-8; käuflich erhältlich bei der Sigma-Aldrich Chemie GmbH, D-Steinheim) sowie ein Gemisch aus 132,7 g (1064 mmol) einer 45%igen Kaliumhydroxid-Lösung in Wasser (käuflich erhältlich bei der aber GmbH, D-Karlsruhe) und 30,2 g (1676 mmol) deionisiertem Wasser parallel in den Kolben bei 50°C Mantelheizung über 45 Minuten dosiert, wobei die Mischungstemperatur nicht über 55°C anstieg; anschließend wurde 15 Minuten bei 55°C weitergerührt. Man ließ die Mischung langsam auf 23°C abkühlen und rührte 6 Stunden weiter. Die Trocknung der Mischung erfolgte in einem Mini-Sprühtrockner B-290 der Fa. Büchi, wobei das Hydrolysat bei einer Zulufttemperatur von 210°C und einem Durchsatz von 5% mittels Zweistoffdüse von oben in die Sprühkammer versprüht wurde. Es konnten 190 g festes Siliconat-Pulver (Siliconat 2) mit einem Kalium:Silicium-Verhältnis von 0,65:1 isoliert werden, welches einen Festgehalt, ermittelt mit der Festgehaltswaage HR73 Halogen Moisture Analyzer von Mettler Toledo bei 160°C, von 94,3 Gew.-% aufwies.

Unter Stickstoffatmosphäre wurden 147,5 g (769 mmol) des so erhaltenen Siliconats 2 vorgelegt und mit 295,0 g wasserfreiem tert-Butylmethylether (käuflich erhältlich bei der Sigma-Aldrich Chemie GmbH, D-Steinheim) vermischt, sodass eine gut rührbare Suspension entstand. Anschließend wurden 139,0 g (1152 mmol) Chlordimethylvinylsilan (CAS 1719-58-0; käuflich erhältlich bei der Sigma-Aldrich Chemie GmbH, D-Steinheim) über eine Zeitraum von 30 Minuten hinzugefügt wobei sich die Mischung erwärmte und Gasentwicklung auftrat; die Temperatur der Mischung erhöhte sich dabei auf 56°C. Nach Zugabe wurde die Mischung 5 Stunden bei 56°C unter Rückfluss erhitzt und dann auf Raumtemperatur abgekühlt, bevor 283,8 g (1575 mmol) deionisiertes Wasser vorsichtig innherhalb von 2 Minuten hinzugegeben wurden, wobei die Temperatur von 30°C auf 25°C abnahm. Nach vollständiger Zugabe ließ man 30 Minuten weiterrühren, bevor die zwei entstandenen Phasen voneinander getrennt wurden. Die obere Phase wurde filtriert und der Filterkuchen mit 77,0 g tert-Butylmethylether portionsweise gewaschen. Es wurde ein klares, gelbliches Filtrat erhalten. Die volatilen Bestandteile der vereinigten Filtrate wurden abdestilliert und der Rückstand bei 100°C und 0,5 mbar entflüchtigt. Das erhaltene Produkt (Siloxankomponente 2) fiel als farbloser, leicht gelblicher, öliger Rückstand an mit der mittleren Zusammensetzung $(PhSiO_{3/2})_{0,69}(ViMe_2SiO_{1/2})_{0,31}$, einer Zahlenmittel-Molmasse Mn von 1160 g/mol, einer Gewichtsmittel-Molmasse Mw von 1310 g/mol und einer Polydispersität von 1,13 aufwies.

**Beispiel 1**

50,0 g Siloxankomponente 1 wurden mit 17,0 g 1,4-Bis(dimethylsilyl)benzol (CAS 2488-01-9; käuflich erhältlich bei der abcr GmbH, D-Karlsruhe) in einem Speedmixer™ DAC 150 FVZ von der Firma Hauschild & Co. KG 10 Sekunden bei 3000 Umdrehungen/min vermischt, danach wurden der Mischung 0,02 g einer Mischung von 1,0 g Karstedt-Katalysator (CAS 68478-92-2; käuflich erhältlich unter der Bezeichnung Platinum(0)divinyltetramethylsiloxane complex "KARSTEDT Concentrate 20% sol. L006P" bei der Heraeus Detuschland GmbH & Co. KG, D-Hanau) in 20,0 g eines Polydimethylsiloxans mit $ViMe_2Si$-Endgruppen und einer mittleren Viskosität von 800 bis 1200 mPa.s (CAS 68083-19-2; käuflich erhältlich unter der Bezeichung VINYLPOLYMER 1000 bei der Wacker Chemie AG, D-München) hinzugefügt; die Mischung wurde im Speedmixer™ DAC 150 FVZ 30 Sekunden bei 3000 Umdrehungen/min vermischt, in die Edelstahlzylinderformen gegossen und ausgehärtet. Die Ergebnisse der Messungen sind in Tabelle 1 zusammengefasst.

**Beispiel 2**

Die in Beispiel 1 beschriebene Verfahrensweise wurde wiederholt mit der Abänderung, dass anstelle von Siloxankomponente 1 50,0 g Siloxankomponente 2 und 13,4 g 1,4-Bis(dimethylsilyl)-benzol eingesetzt wurden; da die Viskosität bei längerer Lagerung ansteigt, wurde die Siloxankomponente 2 vor der Verwendung eine Stunde auf 70°C erwärmt und auf Umgebungstemperatur abkühlen gelassen. Die Ergebnisse der Messungen sind in Tabelle 1 zusammengefasst.

Tabelle 1

| Beispiel | B1 | B2 |
|---|---|---|
| Biege-Elastizitätsmodul bei 23°C [GPa] | 1,0 | 1,0 |
| Biegefestigkeit $\sigma_{fM}$ bei 23°C [MPa] | 31 | 35 |
| tan delta$_{max}$ | 1,051 | 0,859 |
| Halbwertsbreite [°C] | 13 | 16 |
| Fließverhältnis $\sigma_{20\%} : \sigma_y$ bei 25°C | 0,78 | 0,98 |

**Patentansprüche**

1. Durch Hydrosilylierungsreaktion vernetzbare Zusammensetzungen enthaltend

    (A) aliphatisch ungesättigte Organopolysiloxane hergestellt durch Umsetzung von

        (i) Alkalisalzen von Silanolen der allgemeinen Formel

$$R_aR^1{}_b(OH)_{3-p}Si(OM)_p \qquad (II)$$

        und/oder deren Kondensationsprodukten,
        mit der Maßgabe, dass in Komponente (i) das durchschnittliche Molverhältnis Alkalimetall:Silicium 0,10 bis 2,00 beträgt,
        mit (ii) Chlorsilanen der allgemeinen Formel

$$R^7{}_rR^8R^9{}_tSiCl \qquad (III),$$

wobei

M Alkalimetallkation darstellt,
R und $R^7$ unabhängig voneinander gleich oder verschieden sein können und Alkylreste darstellen,
$R^8$ gleich oder verschieden sein kann und einwertige Kohlenwasserstoffreste mit aliphatischen Kohlenstoff-Kohlenstoff-Mehrfachbindungen bedeutet,
$R^1$ und $R^9$ unabhängig voneinander gleich oder verschieden sein können und von aliphatischen Kohlenstoff-Kohlenstoff-Mehrfachbindungen freie, aromatische Kohlenwasserstoffreste bedeuten,
a 0 oder 1 ist,
b 0 oder 1 ist, mit der Maßgabe, dass a+b=1 ist,
p 1, 2 oder 3 ist,
r 0, 1, 2 oder 3 ist und
t 0, 1 oder 2 ist, mit der Maßgabe, dass r+t=2 ist,
mit der Maßgabe, dass die Siliconatkomponente (i) und/oder die Chlorsilane (ii) der Formel (III) mindestens einen von aliphatischer Kohlenstoff-Kohlenstoff-Mehrfachbindung freien, aromatischen Kohlenwasserstoffrest aufweisen,

(B) Organosiliciumverbindungen mit zwei Si-gebundenen Wasserstoffatomen und
(C) die Anlagerung von Si-gebundenem Wasserstoff an aliphatische Mehrfachbindung fördernden Katalysator.

2. Zusammensetzungen gemäß Anspruch 1, **dadurch gekennzeichnet, dass** bei der Herstellung von Komponente (A) pro Mol-Äquivalent Siliconat-Komponente (i) 1,0 bis 20,0 Mol-Äquivalente Chlorsilane (ii) eingesetzt werden.

3. Zusammensetzungen gemäß Anspruch 1 oder 2, **dadurch gekennzeichnet, dass** Organopolysiloxane (A) durchschnittlich 9 bis 25 Siliciumatome aufweisen.

4. Zusammensetzungen gemäß einem oder mehreren der Ansprüche 1 bis 3, **dadurch gekennzeichnet, dass** es sich bei Organopolysiloxanen (A) um solche der durchschnittlichen Formel

$$[R_aR^1{}_bSiO_{3/2}]_m[R^7{}_rR^8R^9{}_tSiO_{1/2}]_n \qquad (I)$$

handelt, wobei R, $R^1$, $R^7$, $R^8$, $R^9$, a, b, r und t die oben genannten Bedeutungen haben und
m $\geq 0,50$ und $\leq 0,70$ ist sowie
n $\geq 0,30$ und $\leq 0,50$ ist,
mit der Maßgabe, dass in Formel (I) die Summe b+t$\neq$0 und die Summe m+n gleich 1 ist.

5. Zusammensetzungen gemäß einem oder mehreren der Ansprüche 1 bis 4, **dadurch gekennzeichnet, dass** es sich bei Koppler (B) um Organosiliciumverbindungen enthaltend Einheiten der Formel

$$R^4{}_eH_fR^5{}_gSiO_{(4-e-f-g)/2} \qquad (IV)$$

handelt, worin
$R^4$ gleich oder verschieden sein kann und einen einwertigen oder zweiwertigen, SiC-gebundenen, gegebenenfalls substituierten, aliphatisch gesättigten Kohlenwasserstoffrest bedeutet,
$R^5$ gleich oder verschieden sein kann und einen einwertigen oder zweiwertigen, SiC-gebundenen, gegebenenfalls substituierten aromatischen, aliphatisch gesättigten Kohlenwasserstoffrest bedeutet,
e 0, 1, 2 oder 3 ist,
f 0, 1 oder 2 ist und
g 0, 1 oder 2 ist,
mit der Maßgabe, dass e+f+g $\leq$ 4 ist und pro Molekül zwei Si-gebundene Wasserstoffatome anwesend sind.

6. Zusammensetzungen gemäß Anspruch 5, **dadurch gekennzeichnet, dass** Koppler (B) pro Molekül mindestens einen Rest $R^5$ gleich einem zweiwertigen, SiC-gebundenen, aromatischen, aliphatisch gesättigten Kohlenwasserstoffrest, der insbesondere zwei Einheiten der Formel (IV) miteinander verbindet, enthält.

7. Zusammensetzungen gemäß einem oder mehreren der Ansprüche 1 bis 6, **dadurch gekennzeichnet, dass** es sich um solche handelt, enthaltend

(A) aliphatisch ungesättigte Organopolysiloxane hergestellt durch Umsetzung von
Komponente (i) mit Komponente (ii) gegebenenfalls in Anwesenheit von organischem Lösungsmittel (iii) und
gegebenenfalls in Anwesenheit einer Hilfsbase (iv), wobei das Produktgemisch bevorzugt wässrig aufgearbeitet,
filtriert und entflüchtigt wird,
(B) Organosiliciumverbindungen mit zwei Si-gebundenen Wasserstoffatomen und
(C) die Anlagerung von Si-gebundenem Wasserstoff an aliphatische Mehrfachbindung fördernden Katalysator.

gegebenenfalls (D) Inhibitor,
gegebenenfalls (E) weitere Bestandteile sowie
gegebenenfalls (F) Lösungsmittel.

8. Verfahren zur Herstellung der Zusammensetzungen gemäß einem oder mehreren der Ansprüche 1 bis 7 durch Vermischung der einzelnen Komponenten.

9. Verfahren gemäß Anspruch 8, **dadurch gekennzeichnet, dass** Komponente (A) direkt nach der Umsetzung von Komponente (i) mit Chlorsilanen (ii), gegebenenfalls in organischem Lösungsmittel (iii) sowie gegebenenfalls in Anwesenheit einer Hilfsbase (iv), wässrig aufgearbeitet, entflüchtigt und anschließend mit Organosiliciumkomponente (B) sowie den gegebenenfalls eingesetzten Komponenten (D), (E) und (F) in beliebiger Reihenfolge vermischt sowie dann Komponente (C), gegebenenfalls als Mischung mit Komponente (D) oder (F), hinzugefügt wird.

10. Formkörper, hergestellt durch Vernetzung der Zusammensetzungen gemäß einem oder mehreren der Ansprüche 1 bis 7.

**Claims**

1. Hydrosilylation-crosslinkable compositions containing

    (A) aliphatically unsaturated organopolysiloxanes produced by reaction of

        (i) alkali metal salts of silanols of general formula

$$R_a R^1_b (OH)_{3-p} Si (OM) p \qquad (II)$$

        and/or condensation products thereof,
        with the proviso that in component (i) the average molar ratio of alkali metal:silicon is 0.10 to 2.00,
        with (ii) chlorosilanes of general formula

$$R^7_r R^8 R^9_t SiCl \qquad (III),$$

        wherein

            M represents alkali metal cation,
            R and $R^7$ independently of one another may be identical or different and represent alkyl radicals,
            $R^8$ may be identical or different and represents monovalent hydrocarbon radicals having aliphatic carbon-carbon multiple bonds,
            $R^1$ and $R^9$ independently of one another may be identical or different and represent aromatic hydrocarbon radicals free from aliphatic carbon-carbon multiple bonds,
            a is 0 or 1,
            b is 0 or 1, with the proviso that a+b=1,
            p is 1, 2 or 3,
            r is 0, 1, 2 or 3 and
            t is 0, 1 or 2, with the proviso that r+t=2,
            with the proviso that siliconate component (i) and/or the chlorosilanes (ii) of formula (III) comprise at least one aromatic hydrocarbon radical free from aliphatic carbon-carbon multiple bond,

(B) organosilicon compounds having two Si-bonded hydrogen atoms and
(C) catalyst which promotes addition of Si-bonded hydrogen onto aliphatic multiple bond.

2. Compositions according to Claim 1, **characterized in that** the production of component (A) employs 1.0 to 20.0 mol equivalents of chlorosilanes (ii) per mol equivalent of siliconate component (i).

3. Compositions according to Claim 1 or 2, **characterized in that** organopolysiloxanes (A) have an average of 9 to 25 silicon atoms.

4. Compositions according to one or more of Claims 1 to 3, **characterized in that** organopolysiloxanes (A) are those having the average formula

$$[R_aR^1{}_bSiO_{3/2}]_m[R^7{}_rR^8R^9{}_tSiO_{1/2}]_n \qquad (I),$$

wherein R, $R^1$, $R^7$, $R^8$, $R^9$, a, b, r and t are as defined above and
m is $\geq 0.50$ and $\leq 0.70$ and
n is $\geq 0.30$ and $\leq 0.50$,
with the proviso that in formula (I) the sum of b+t$\neq$0 and the sum of m+n is 1.

5. Compositions according to one or more of Claims 1 to 4, **characterized in that** coupler (B) is organosilicon compounds containing units of formula

$$R^4{}_eH_fR^5{}_gSiO_{(4-e-f-g)/2} \qquad (IV),$$

wherein

$R^4$ may be identical or different and represents a monovalent or divalent, SiC-bonded, optionally substituted, aliphatically saturated hydrocarbon radical,
$R^5$ may be identical or different and represents a monovalent or divalent, SiC-bonded, optionally substituted, aliphatically saturated aromatic hydrocarbon radical,
e is 0, 1, 2 or 3,
f is 0, 1 or 2 and
g is 0, 1 or 2,
with the proviso that e+f+g is $\leq$ 4 and two Si-bonded hydrogen atoms are present per molecule.

6. Compositions according to Claim 5, **characterized in that** coupler (B) contains per molecule at least one radical $R^5$ which is a divalent, SiC-bonded, aliphatically saturated aromatic hydrocarbon radical which in particular connects two units of formula (IV) to one another.

7. Compositions according to one or more of Claims 1 to 6, **characterized in that** they are compositions containing

(A) aliphatically unsaturated organopolysiloxanes produced by reaction of
component (i) with component (ii) optionally in the presence of organic solvent (iii) and optionally in the presence of an auxiliary base (iv), wherein the product mixture is preferably subjected to aqueous workup, filtered and devolatilized,
(B) organosilicon compounds having two Si-bonded hydrogen atoms and
(C) catalyst which promotes addition of Si-bonded hydrogen onto aliphatic multiple bond,

optionally (D) inhibitor,
optionally (E) further constituents and
optionally (F) solvent.

8. Process for producing the compositions according to one or more of Claims 1 to 7 by mixing the individual components.

9. Process according to Claim 8, **characterized in that**, directly after the reaction of component (i) with chlorosilanes (ii), optionally in organic solvent (iii) and optionally in the presence of an auxiliary base (iv), component (A) is subjected to aqueous workup, devolatilized, and subsequently mixed with organosilicon component (B) and the optionally employed components (D), (E) and (F) in any desired sequence followed by addition of component (C), optionally as a mixture with component (D) or (F).

10. Molded article produced by crosslinking the compositions according to one or more of Claims 1 to 7.

**Revendications**

1. Compositions réticulables par une réaction d'hydrosilylation, contenant

    (A) des organopolysiloxanes à insaturation aliphatique préparés par réaction

        (i) de sels de métaux alcalins de silanols de formule générale

$$R_a R^1_b (OH)_{3-p} Si(OM)_p \qquad (II)$$

        et/ou leurs produits de condensation,
        à la condition que, dans le composant (i), le rapport en moles moyen métal alcalin:silicium soit de 0,10 à 2,00, avec (ii) des chlorosilanes de formule générale

$$R^7_r R^8 R^9_t SiCl \qquad (III),$$

        dans lesquelles
        M représente un cation d'un métal alcalin,
        R et $R^7$, indépendamment l'un de l'autre, peuvent être identiques ou différents et représentent des radicaux alkyle,
        $R^8$ peut être identique ou différent et représente des radicaux hydrocarbonés monovalents présentant des liaisons multiples carbone-carbone aliphatiques,
        $R^1$ et $R^9$, indépendamment l'un de l'autre, peuvent être identiques ou différents et représentent des radicaux hydrocarbonés aromatiques exempts de liaisons multiples carbone-carbone aliphatiques,
        a représente 0 ou 1,
        b représente 0 ou 1, à la condition que a + b = 1,
        p représente 1, 2 ou 3,
        r représente 0, 1, 2 ou 3 et
        t représente 0, 1 ou 2, à la condition que r + t = 2,
        à la condition que le composant siliconate (i) et/ou les chlorosilanes (ii) de formule (III) présentent au moins un radical hydrocarboné aliphatique exempt de liaison multiple carbone-carbone aromatique,

    (B) des composés organiques du silicium ayant deux atomes d'hydrogène liés à Si et
    (C) la fixation de l'hydrogène lié à Si sur un catalyseur accélérant la liaison multiple aliphatique.

2. Compositions selon la revendication 1, **caractérisées en ce que**, lors de la préparation du composant (A), on utilise par équivalent en moles du composant siliconate (i) 1,0 à 20,0 équivalents en moles de chlorosilanes (ii).

3. Compositions selon la revendication 1 ou 2, **caractérisées en ce que** les organopolysiloxanes (A) comportent en moyenne 9 à 25 atomes de silicium.

4. Compositions selon l'une ou plusieurs des revendications 1 à 3, **caractérisées en ce que**, pour ce qui concerne les organopolysiloxanes (A), il s'agit de ceux de formule moyenne

$$[R_a R^1_b SiO_{3/2}]_m [R^7_r R^8 R^9_t SiO_{1/2}]_n \qquad (I)$$

dans laquelle R, $R^1$, $R^7$, $R^8$, $R^9$, a, b, r et t ont les significations données ci-dessus, et
m ≥ 0,50 et ≤ 0,70, ainsi que
n ≥ 0,30 et ≤ 0,50,

à la condition que, dans la Formule (I), la somme b + t ≠ 0 et la somme m + n soit égale à 1.

5. Compositions selon l'une ou plusieurs des revendications 1 à 4, **caractérisées en ce que**, pour ce qui concerne l'agent de couplage (B), il s'agit de composés organiques du silicium contenant des motifs de formule

$$R^4_e H_f R^5_g SiO_{(4-e-f-g)/2} \qquad (IV)$$

dans laquelle
$R^4$ peut être identique ou différent et représente un radical hydrocarboné monovalent ou divalent, lié à SiC, éventuellement substitué, à saturation aliphatique,
$R^5$ peut être identique ou différent et représente un radical hydrocarboné monovalent ou divalent, lié à SiC, éventuellement substitué, aromatique, à saturation aliphatique,
e représente 0, 1, 2 ou 3,
f représente 0, 1 ou 2 et
g représente 0, 1 ou 2,
à la condition que e + f + g ≤ 4 et que, par molécule, on ait deux atomes d'hydrogène liés à Si.

6. Compositions selon la revendication 5, **caractérisées en ce que** l'agent de couplage (B) contient par molécule au moins un radical $R^5$ identique à un radical hydrocarboné divalent, lié à SiC, aromatique, à saturation aliphatique, qui relie l'un à l'autre en particulier deux motifs de formule (IV).

7. Compositions selon l'une ou plusieurs des revendications 1 à 6, **caractérisées en ce qu'**il s'agit de telles compositions, contenant

(A) des organopolysiloxanes à insaturation aliphatique préparés par réaction du composant (i) avec le composant (ii), éventuellement en présence de solvants organiques (iii) et éventuellement en présence d'une base auxiliaire (iv), le mélange de produits étant de préférence traité par voie aqueuse, filtré et volatilisé,
(B) des composés organiques du silicium ayant deux atomes d'hydrogène liés à Si et
(C) la fixation d'un hydrogène lié à Si sur un catalyseur accélérant la liaison multiple aliphatique,

éventuellement (D) un inhibiteur,
éventuellement (E) d'autres constituants ainsi que
éventuellement (F) des solvants.

8. Procédé de préparation des compositions selon l'une ou plusieurs des revendications 1 à 7 par mélange des composants individuels.

9. Procédé selon la revendication 8, **caractérisé en ce que** le composant (A) est, immédiatement après la réaction du composant (i) avec les chlorosilanes (ii), éventuellement dans un solvant organique (iii) ainsi qu'éventuellement en présence d'une base auxiliaire (iv), traité par voie humide, volatilisé puis mélangé au composant organique du silicium (B) ainsi qu'aux composants éventuellement utilisés (D), (E) et (F) dans un ordre quelconque, le composant (C) étant ensuite ajouté, éventuellement sous forme d'un mélange avec le composant (D) ou (F).

10. Objet moulé, fabriqué par réticulation des compositions selon l'une ou plusieurs des revendications 1 à 7.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016001154 A
- WO 2014065432 A1
- JP 2011246680 A
- WO 2013041385 A
- WO 2013075969 A
- WO 2012022544 A
- EP 110370 B

**In der Beschreibung aufgeführte Nicht-Patentliteratur**

- *CHEMICAL ABSTRACTS,* 775-12-2
- *CHEMICAL ABSTRACTS,* 766-08-5
- *CHEMICAL ABSTRACTS,* 6689-22-1
- *CHEMICAL ABSTRACTS,* 2488-01-9
- *CHEMICAL ABSTRACTS,* 849830-54-2
- *CHEMICAL ABSTRACTS,* 873311-51-4
- *CHEMICAL ABSTRACTS,* 400758-55-6
- *CHEMICAL ABSTRACTS,* 68478-92-2
- *CHEMICAL ABSTRACTS,* 780-69-8
- *CHEMICAL ABSTRACTS,* 1719-58-0
- *CHEMICAL ABSTRACTS,* 68083-19-2